# EUROPEAN PATENT APPLICATION

(11) **EP 3 109 062 A1**
(43) Date of publication of application: **28.12.2016**
(21) Application number: 15173951.3
(22) Date of filing: 25.06.2015
(51) Int. Cl.: B60B 27/00, B60B 27/02, B60B 27/04, B62M 9/10

(54) **ASSEMBLY OF HUB AND FREEWHEEL**

(71) Applicant: Chosen Co., Ltd., Changhua County 50744 (TW)
(72) Inventor: Chen, Ching-Shu, Changhua City (TW)
(74) Representative: Lang, Christian

(57) **Abstract**

An assembly of a hub and freewheels is revealed. The assembly includes a hub body, a freewheel cluster, a connecting sleeve and an external freewheel. The connecting sleeve is mounted in a ratchet sleeve of the hub body for extension of the ratchet sleeve and mounting of the external freewheel. Thus the number of small sprockets of the freewheel is increased and the number of teeth of the smallest sprocket is significantly reduced. While riders are going downhill, the speed is changed by engagement with the sprocket of the external freewheel. The pedaling power is increased through the reduced diameter of the sprocket and the reduced number of the teeth. Thus riders control the speed by effective control of the freewheels. The rider's feet won't slip off the pedals while descending and riders can step on pedals harder for acceleration. The ride speed is increased efficiently.

## Description

### BACKGROUND OF THE INVENTION

### Fields of the invention

The present invention relates to a hub, especially to an assembly of a hub and freewheels applied to downhill bikes.

### Descriptions of Related Art

Bicycle riders need to adjust their speed by changing gear under varying road conditions. A change mechanism, a derailleur system, consists of a freewheel mechanism, a chainwheel set, a derailleur, a chain, shifters, cables, etc. Generally, the chainwheel set includes at least two or three sprockets attached to cranks. The sprocket is changed by using shifters. The freewheel mechanism is connected to a hub of a rear wheel and generally having 5-10 sprockets. The sprockets are changed by the derailleur. The speed shift is achieved by using the chainwheel in combination with different front or rear sprockets to vary the gear ratio. The chainwheel attached to the cranks is for power input.

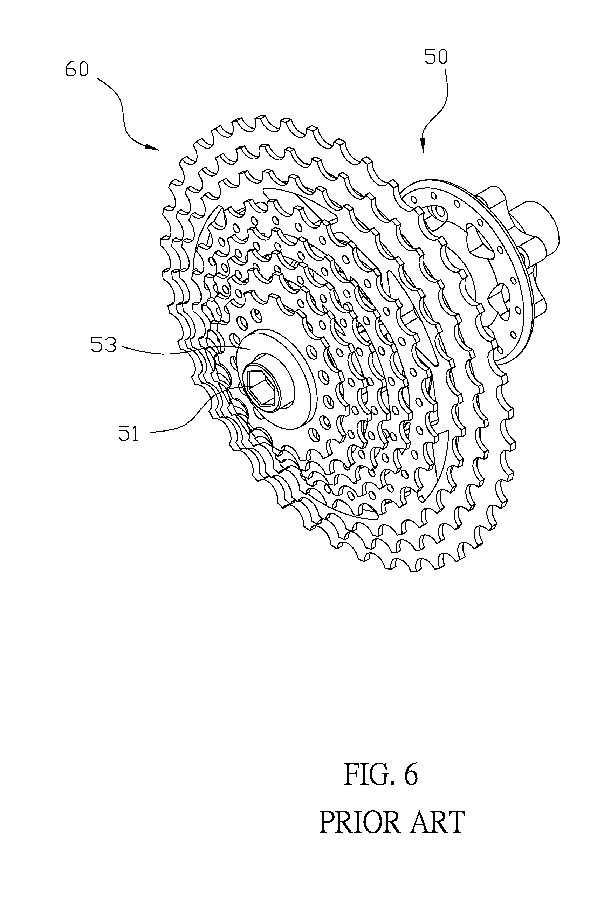

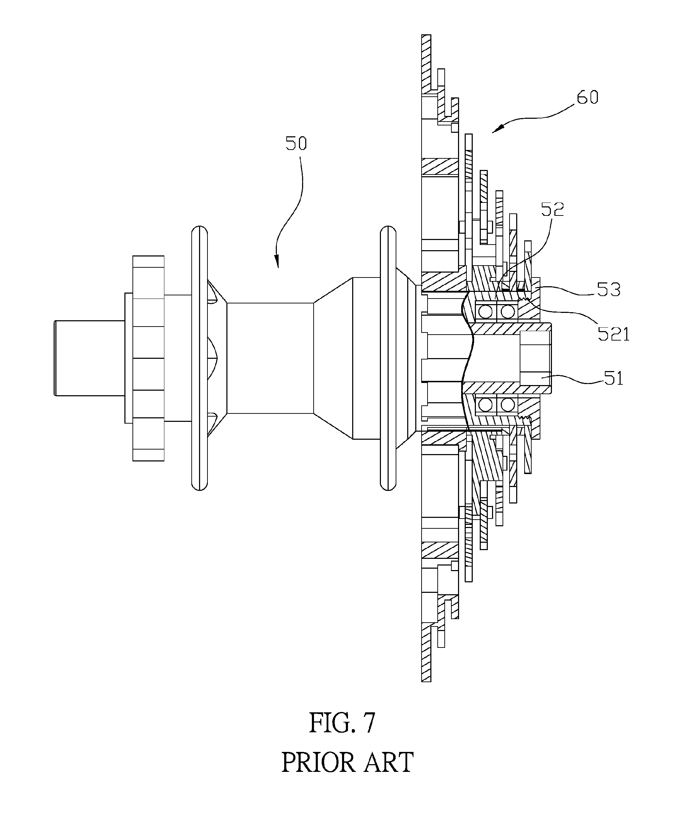

Refer to Fig. 6 and Fig. 7, a main body 50 of a common hub available on the market includes a shaft 51, and a ratchet sleeve 52 through which the shaft 51 is passed through and which is used for mounting and positioning a freewheel cluster 60. The ratchet sleev52 and the freewheel cluster 60 are locked with and positioning by each other through corresponding mounting slots. The freewheel cluster 60 is mounted on the ratchet sleev52 and moved together with the ratchet sleeve 52. A threaded segment 521 is formed on an inner wall of the ratchet sleev52. A lock nut 53 is screwed on the threaded segment 521 and is against the freewheel cluster 60 so as to stop the freewheel cluster 60 on the ratchet sleev52. Thus the assembly of the main body 50 of the hub and the freewheel cluster 60 is completed. Therefore riders can change the sprockets by the shifters.

However, the above structure has the following shortcomings. The number of the sprockets of the freewheel cluster 60 available on the market depends on the size of the ratchet sleeve 52. The number of the teeth of the smallest sprocket is further limited. While going downhill, most of the teeth of the smallest sprocket only provide riders with the pedaling speed suitable for gentle and low slope. Once the slope is increased or changed dramatically, the ride speed cannot be controlled by controlling the freewheel cluster 60. The rider's feet may slip off the pedals. The rider is also unable to accelerate by pedaling. Thus the usefulness is reduced. If the rider wants to put more sprockets on the bike, a corresponding ratchet sleeve 52 will be required which will cause an increase of costs for the development and manufacturing.

### SUMMARY OF THE INVENTION

Therefore it is a primary object of the present invention to provide an assembly of a hub and freewheels that overcomes the shortcoming mentioned above.

In order to achieve the above object, an assembly of a hub and freewheels according to the present invention includes a hub body, a freewheel cluster, a connecting sleeve and an external freewheel. The hub body has a shaft and a ratchet sleeve. The ratchet sleeve is fitted over the shaft and used for mounting and positioning the freewheel cluster. A plurality of mounting slots is axially arranged around an outer wall of the ratchet sleeve and an inner threaded portion is disposed on an inner wall of the ratchet sleeve. The connecting sleeve is hollow and includes a through hole for being fitted over the shaft. One end of the connecting sleeve is formed as assembly part with threads, whereat the connecting sleeve is screwed on the ratchet sleeve by means of the assembly part. A mounted part with smaller diameter is integrated with the assembly part and having an outer thread on the outer circumference thereof. A clamping nut is screwed on the outer thread. The external freewheel includes a plurality of sprockets with reduced diameters and mounted in turn. A clearance hole formed at the center of the sprockets of the external freewheel is fitted over the mounted part of the connecting sleeve. The diameter of the biggest sprocket of the external freewheel is smaller than the outer diameter of the smallest sprocket of the freewheel cluster. A plurality of stopper ribs is arranged at one end surface of the biggest sprocket and is corresponding to the mounting slots of the ratchet sleeve. In accordance with the structure mentioned above, the assembly of the hub and the freewheels is formed.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a perspective view of an embodiment according to the present invention;
Fig. 2 is an explosive view of an embodiment according to the present invention;
Fig. 3 is an explosive view of a connecting sleeve, an external freewheel and a hub body of an embodiment according to the present invention;
Fig. 4 is an explosive view of a longitudinal section of a connecting sleeve, an external freewheel and a hub body of an embodiment according to the present invention;
Fig. 5 is a longitudinal section of a connecting sleeve, an external freewheel and a hub body assembled with each other in an embodiment according to the present invention;
Fig. 6 is a perspective view of a prior art;
Fig. 7 is a longitudinal section of a prior art.

### DETAILED DESCRIPTION OF THE PREFFERED EMBODIMENT

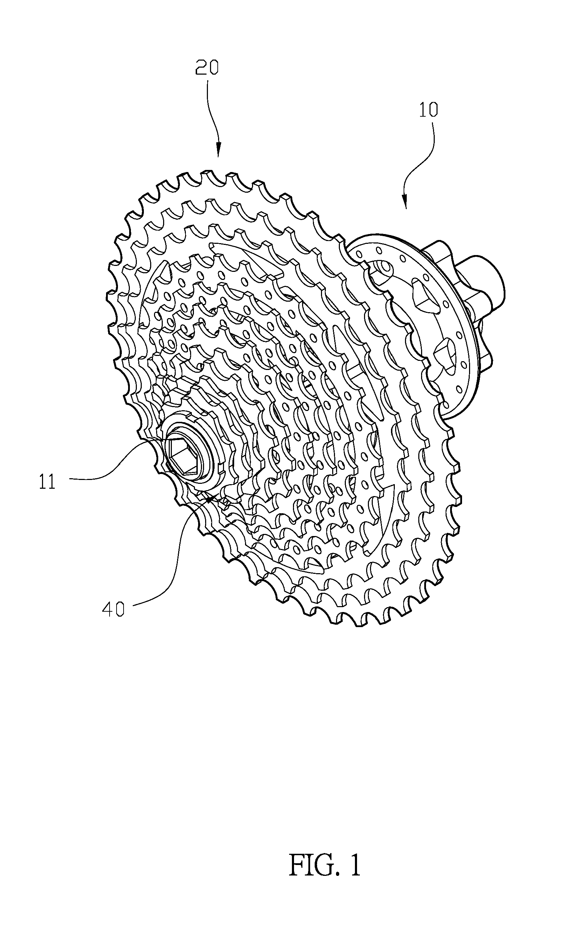

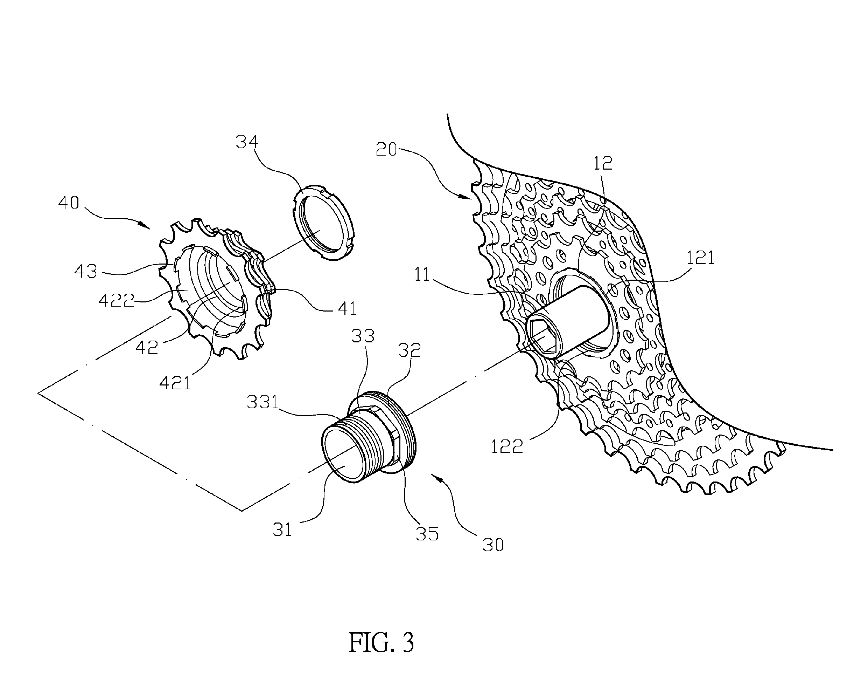

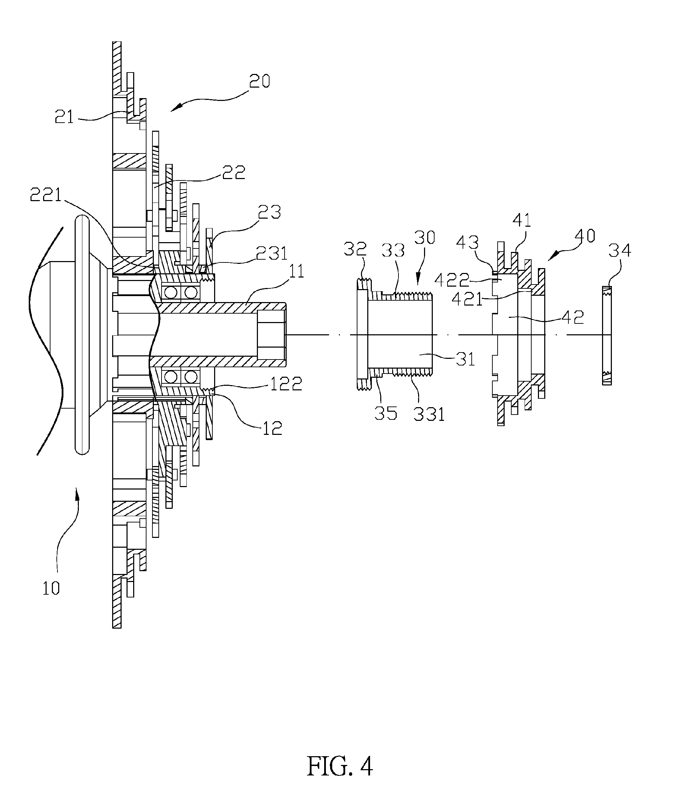

Refer to Fig.1 , Fig. 2 and Fig. 3, an assembly of a hub and freewheels of the present invention includes a hub body 10, a freewheel cluster 20, a connecting sleeve 30 and an external freewheel 40. The hub body 10 consists of a shaft 11 and a ratchet sleeve 12 through which the shaft 11 is passed. The ratchet sleeve 12 is used for mounting and positioning the freewheel cluster 20. The hub body 10 is applied to downhill bikes. The diameter of the shaft 11 is 12mm. A plurality of mounting slots 121 is arranged around an outer wall of the ratchet sleeve 12 along an axial direction and an inner threaded portion 122 is disposed on an inner wall of the ratchet sleeve 12. The freewheel cluster 20 is integrally formed and having a plurality of sprockets 201. The sprockets 201 with reduced diameters are arranged in turn and there is a preset interval between the two adjacent sprockets 201. Alternatively, the freewheel cluster 20 can also be formed by assembly of a first freewheel 21 and a second freewheel 22, each of which has a plurality of sprockets 201 having reduced diameters and arranged in turn. There is a preset interval between the two adjacent sprockets 201 while the sprockets 201 are disposed and stopped on the ratchet sleeve 12 of the hub body 10. Moreover, a surface on one end of the second freewheel 22 adjacent to the first freewheel 21 is set with a plurality of spacing ribs 221, as shown in Fig. 4. The freewheel cluster 20 further includes at least one linked sprocket 23 whose outer diameter is smaller than the diameter of the smallest sprocket of the freewheel cluster 20. Each linked sprocket 23 is used in combination with a washer 231. The connecting sleeve 30 is hollow and having a through hole 31, an assembly part 32, a mounted part 33, a clamping nut 34 and a fastening part for non-circular tools 35. The shaft 11 is passed through the through hole 31 while the assembly part 32 with threads is arranged at one end of the connecting sleeve 30 and is screwed on the ratchet sleeve 12. The mounted part 33 with a smaller diameter is integrated with the assembly part 32 and having an outer thread 331 on the outer circumference thereof. The clamping nut 34 is screwed on the outer thread 331. The fastening part for non-circular tools 35 is disposed on the mounted part 33 and adjacent to the assembly part 32. The external freewheel 40 consists of a plurality of sprockets 41, a clearance hole 42, and a plurality of stopper ribs 43. The sprockets 41 with reduced diameters are ananged in turn and the clearance hole 42 is formed at the center of the sprockets 41. Two sides of the clearance hole 42 have step-like shape to form a binding portion 421 and a mounting portion 422. The binding portion 421 is fitted on the mounted part 33 of the connecting sleeve 30 while an inner diameter of the mounting portion 422 is a bit larger than an outer diameter of the ratchet sleeve 12. The diameter of the largest sprocket 41 of the external freewheel 40 is smaller than an outer diameter of the smallest sprocket 201 of the freewheel cluster 20. The stopper ribs 43 are disposed on surface at one end of the largest sprocket 41 and are corresponding to the mounting slots 121 of the ratchet sleeve 12. The number of teeth of the smallest sprocket 41 of the external freewheel 40 is 8 or 9.

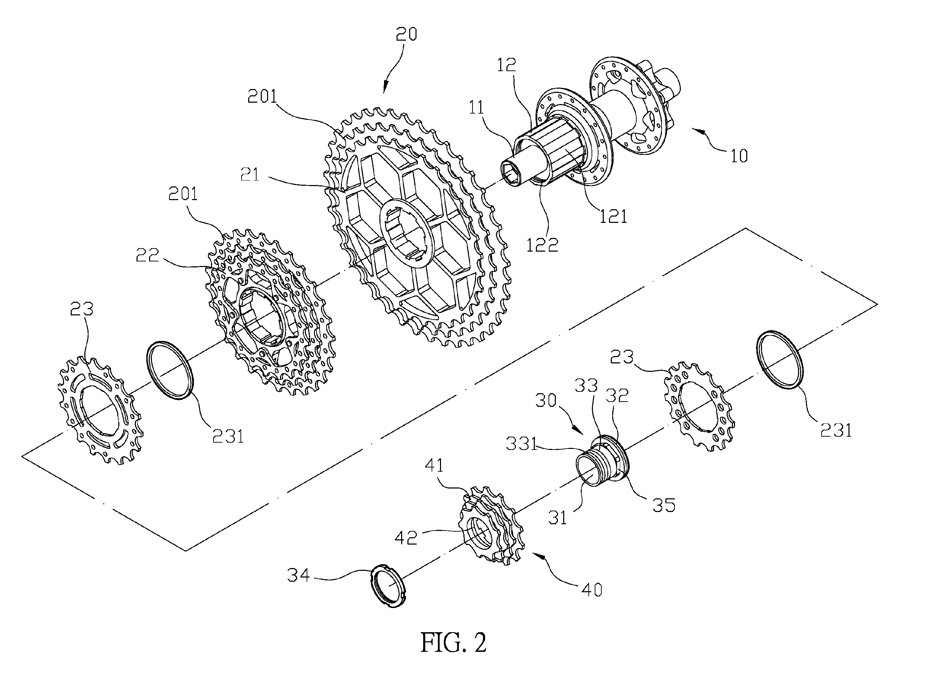

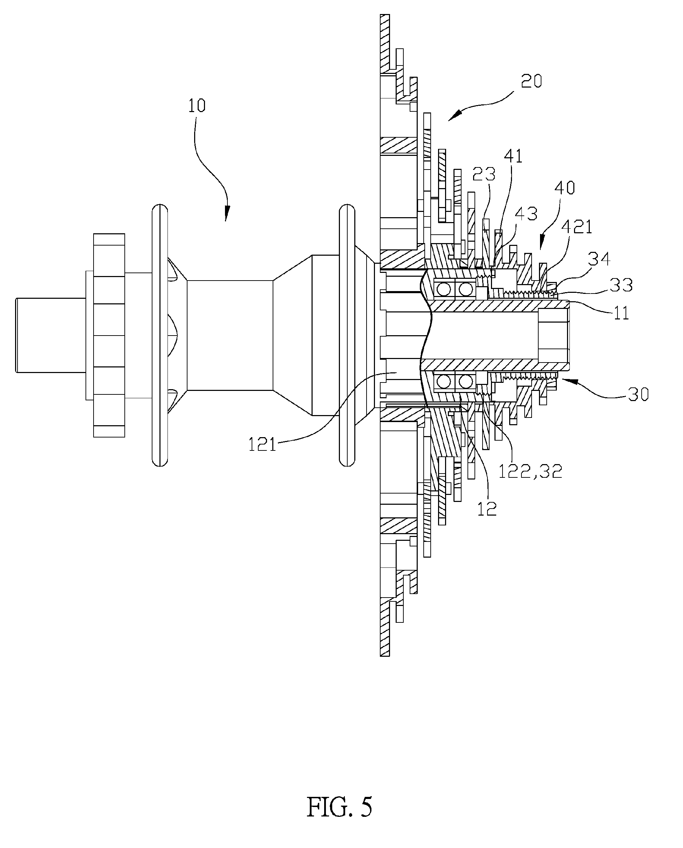

Refer from Fig. 2 to Fig. 5, while in use, the freewheel cluster 20 is assembled on the ratchet sleeve 12 of the hub body 10. The freewheel cluster 20 is mounted and positioned by the mounting slots 121. The freewheel cluster 20 is formed by the assembly of the first freewheel 21 and the second freewheel 22. The sprockets 201 of each freewheel 21, 22 with reduced diameter are fitted and positioned on the ratchet sleeve 12. A surface at one end of the second freewheel 22 adjacent to the first freewheel 21 is arranged with a plurality of spacing ribs 221. Thus there is a certain interval between the first and the second freewheels 21, 22. When the ratchet sleeve 12 is still able to be mounted with the sprockets, at least one linked sprocket 23 or a plurality of linked sprockets 23 with reduced diameters are arranged at the ratchet sleeve 12 in turn so as to increase speeds of the freewheel cluster 20. The connecting sleeve 30 is fitted on the shaft 11 by the through hole 31 and moved together with the ratchet sleeve 12 by the assembly part 32 engaged with the inner threaded portion 122 of the ratchet sleeve 12. Thus the ratchet sleeve 12 is extended by connection to the sleeve 30. For the hub body 10 applied to the downhill bikes, the space of the ratchet sleeve 12 required for mounting the freewheels is increased and the external freewheel 40 is able to be mounted on the hub body 10. The binding portion 421 of the clearance hole 42 of the external freewheel 40 is fitted on the mounted part 33 of the connecting sleeve 30. Then the mounting portion 422 of the external freewheel 40 is against the smallest sprocket 201 of the freewheel cluster 20 /or the linked sprocket 23. By the stopper ribs 43 on the mounting portion 422 mounted into the mounting slots 121 of the ratchet sleeve 12 and leaning against an outer wall of the smallest sprocket 201 /or the linked sprocket 23, a preset interval is defined therebetween. Finally the clamping nut 34 is screwed on the outer thread 331 of the connecting sleeve 30 for stopping and positioning. The total number of the sprockets of the freewheel cluster 20 and the sprockets of the external freewheel 40 can be up to 12. The assembly of the hub and the freewheels is completed.

Furthermore, the connecting sleeve 30 can be mounted on a common hub body 10 available on the market now. The connecting sleeve 30 is fastened and fixed by the assembly part 32 engaged with the inner threaded portion 122 of the ratchet sleeve 12. The ratchet sleeve 12 is extended for mounting additional external freewheel 40 due to connection to the connecting sleeve 30. A better way of assembling is to remove the conventional freewheel mounted on the hub body 10. Then the freewheel cluster 20 and the external freewheel 40 are mounted on the hub body 10 in turn. The sprockets of the freewheel cluster 20 and the external freewheel 40 are having reduced diameters and disposed in turn. Therefore the speeds of the bike are increased.

In summary, the assembly of the hub and the freewheels of the present invention has following advantages:
Firstly, the present invention provides a connecting sleeve 30 connected to and mounted on the ratchet sleeve 12 of the hub body 10 so as to achieve extension of the ratchet sleeve 12 for mounting the external freewheel 40. The connecting sleeve 30 can be applied to most of the hub body 10 available on the market now. By replacement of the freewheel cluster 20 and the external freewheel 40, the number of the sprockets match the speeds perfectly. The structure is simple so that the assembly is easy and fast.

Moreover, the hub body 10 used in combination with the connecting sleeve 30 and the external freewheel 40 of the present invention is designed for downhill bikes. By the connecting sleeve 30 and the external freewheel 40 mounted, the number of small sprockets of the freewheel is increased while the number of teeth of the smallest sprocket is significantly reduced. While the rider is going down, the speed is changed by engagement with the sprocket 41 of the external freewheel 40. The pedaling power is increased through the reduced diameter and the reduced number of the teeth of the sprocket 41. Thus the rider can control the freewheels effectively and further control the speed of the bike. The riders will not lose the pedals while going downhill and they can apply force to the pedals for acceleration. Therefore the speed is increased efficiently.

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalents.

## Claims

1. An assembly of a hub and freewheels comprising:
a hub body having a shaft and a ratchet sleeve through which the shaft is passed; the ratchet sleeve used for mounting and positioning a freewheel cluster; the ratchet sleeve having a plurality of mounting slots axially arranged around an outer wall thereof and an inner threaded portion disposed on an inner wall thereof;
a connecting sleeve that is hollow and having
a through hole for fitted over the shaft,
an assembly part with threads set on one end of the connecting sleeve and used for being screwed on the ratchet sleeve,
a mounted part with smaller diameter integrated with the assembly part and having an outer thread on surface thereof, and a clamping nut screwed on the outer thread; and
an external freewheel having
a plurality of sprockets with reduced diameters and arrange in turn,
a clearance hole formed at center of the sprockets and fitted over the mounted part of the connecting sleeve, and
a plurality of stopper ribs disposed on an end surface of one of the sprockets with the largest diameter and corresponding to the mounting slots of the ratchet sleeve; a diameter of the sprocket of the external freewheel with the largest diameter is smaller than an outer diameter of a sprocket of the freewheel cluster with the smallest diameter.

2. The assembly as claimed in claim 1, wherein the freewheel cluster is integrally formed and having a plurality of sprockets with reduced diameters; the sprockets with reduced diameters are arranged in turn and a preset interval is set between the two adjacent sprockets.

3. The assembly as claimed in claim 1, wherein the freewheel cluster includes a first freewheel and a second freewheel assembled with each other; the first freewheel and the second freewheel having a plurality of sprockets respectively while the sprockets are with reduced diameters and arranged in turn; a preset interval is set between the two adjacent sprockets while the sprockets are mounted and stopped on the ratchet sleeve of the hub body; one end surface of the second freewheel adjacent to the first freewheel is arranged with a plurality of spacing ribs.

4. The assembly as claimed in claim 1, claim 2, or claim 3, wherein the freewheel cluster further includes at least one linked sprocket whose outer diameter is smaller than a diameter of the smallest sprocket of the freewheel cluster; the linked sprocket is used in combination with a washer.

5. The assembly as claimed in claim 1, wherein a fastening part for non-circular tools is disposed on the mounted part of the connecting sleeve and is adjacent to the assembly part.

6. The assembly as claimed in claim 1, wherein the number of teeth of one of the sprockets of the external freewheel with the smallest diameter is 8.

7. The assembly as claimed in claim 1, wherein the number of teeth of one of the sprockets of the external freewheel with the smallest diameter is 9.

8. The assembly as claimed in claim 1, wherein two sides of the clearance hole of the external freewheel have step-like shape to form a binding portion and a mounting portion; the binding portion is fitted on the mounted part of the connecting sleeve and an inner diameter of the mounting portion is a bit larger than an outer diameter of the ratchet sleeve; the stopper ribs is disposed on an end surface of the mounting portion.

9. The assembly as claimed in claim 1, wherein the total number of the sprockets of the freewheel cluster and the sprockets of the external freewheel is up to 12.
